# EUROPÄISCHE PATENTSCHRIFT

(11) **EP 3 898 477 B1**
(45) Veröffentlichungstag und Bekanntmachung des Hinweises auf die Patenterteilung: **17.04.2024**
(21) Anmeldenummer: 19821081.7
(22) Anmeldetag: 18.12.2019
(51) Int. Cl.: B66B 1/32

(54) **VERFAHREN UND BREMSSTEUERUNG ZUM STEUERN EINER BREMSE EINER AUFZUGANLAGE**
METHOD AND BRAKE SYSTEM FOR CONTROLLING A BRAKE OF A LIFT SYSTEM
PROCÉDÉ ET COMMANDE DU FREIN PERMETTANT DE COMMANDER UN FREIN D'UNE INSTALLATION D'ASCENSEUR

(30) Priorität: 20.12.2018 EP 18214651
(43) Veröffentlichungstag der Anmeldung: 27.10.2021
(73) Patentinhaber: INVENTIO AG, 6052 Hergiswil (CH)
(72) Erfinder: LINDEGGER, Urs, 6030 Ebikon (CH)
(74) Vertreter: Inventio AG
(86) Internationale Anmeldenummer: PCT/EP2019/086002
(87) Internationale Veröffentlichungsnummer: WO 2020/127517

(56) Entgegenhaltungen:
- EP-A1- 1 431 226
- EP-A1- 1 923 345
- WO-A1-2006/033165
- US-A- 4 984 659

## Beschreibung

Die vorliegende Erfindung betrifft ein Verfahren zum Steuern einer Bremse einer Aufzuganlage. Ferner betrifft die Erfindung eine Bremssteuerung, welche zum Ausführen des vorgeschlagenen Verfahrens eingerichtet ist, sowie eine damit ausgestattete Aufzuganlage.

Beim Betrieb einer Aufzuganlage muss ein hohes Maß an Sicherheit gewährleistet werden, um insbesondere Gefährdungen für Passagiere vermeiden zu können. Zu diesem Zweck ist unter anderem üblicherweise eine Bremse in der Aufzuganlage vorgesehen, mithilfe derer eine Verlagerungsbewegung verlagerbarer Komponenten wie insbesondere einer Aufzugkabine und/oder eines Gegengewichts gebremst bzw. gestoppt und/oder in Position gehalten werden kann.

Es sind verschiedene Arten von Bremsen für Aufzuganlagen bekannt. Beispielsweise kann eine Bremse direkt an der zu bremsenden Komponente, d.h. an der Aufzugkabine und/oder dem Gegengewicht, angeordnet sein und sich somit mit dieser mitbewegen. Zum Bremsen der sich bewegenden Komponente kann die Bremse dann mit einer stationären Komponente innerhalb der Aufzuganlage zusammenwirken. Beispielsweise kann die Bremse Bremsklötze gegen eine stationäre Schiene pressen, um durch die dabei auftretende Reibung die Bewegung der zu bremsenden Komponente zu verlangsamen.

Alternativ kann eine Bremse beispielsweise mit einer Antriebsmaschine zusammenwirken, mithilfe derer eine zu bewegende Komponente verlagert werden kann. Beispielsweise kann die Antriebsmaschine seil- oder riemenartige Tragmittel antreiben, welche mit der Aufzugkabine und/oder dem Gegengewicht verbunden sind. Hierzu kann die Antriebsmaschine beispielsweise eine Treibscheibe besitzen, über welche die Tragmittel verlaufen und durch Traktion angetrieben werden können. In diesem Fall kann die Bremse mit der Treibscheibe oder einer mit der Treibscheibe mechanisch gekoppelten Komponente zusammenwirken, um diese zu bremsen und damit indirekt eine Bewegung der zu bremsenden Komponente zu verlangsamen.

Beispielsweise wird in der US 7,909,145 B2 eine Bremsvorrichtung für einen Aufzug mit einer Überwachungsfunktion beschreiben.

WO 2006/033165 A1 offenbart den Oberbegriff der unabhängigen Ansprüche 1 und 5.

Um den in einer Aufzuganlage zu erfüllenden hohen Sicherheitsanforderungen genügen zu können und insbesondere auch gewährleisten zu können, dass beispielsweise die Aufzugkabine auch bei einem Systemausfall oder einem Ausfall einer Leistungsversorgung zuverlässig gestoppt und/oder in Position gehalten wird, ist die Bremse einer Aufzuganlage typischerweise derart konzipiert, dass sie aktiv geöffnet werden muss, sodass sie beispielsweise bei einem Leistungsausfall selbsttätig aktiviert, d.h. geschlossen, wird. In einer häufig verwendeten Konfiguration weist die Bremse hierzu einen sogenannten Anker auf, der von einem Elektromagneten betätigt wird. Der Anker kann von dem Elektromagneten hierbei zum Lösen der Bremse aus einer ersten Konfiguration, welche hierin als Bremsposition bezeichnet wird, entgegen einer Federkraft in eine zweite Konfiguration, welche hierin als Löseposition bezeichnet wird, gezogen werden. Bei einem Leistungsausfall sorgt eine die Federkraft bewirkende Komponente wie zum Beispiel eine Rückstellfeder dafür, dass die Bremse automatisch in ihre Bremsposition verlagert wird.

Bremsen können in Aufzuganlagen nicht nur dazu eingesetzt werden, bei Notsituationen wie beispielsweise einer Fehlfunktion und/oder eines Ausfalls des Antriebs beispielsweise das Abstürzen des Gegengewichts oder der Aufzugkabine (abhängig von der Beladung der Kabine) zu vermeiden. Darüber hinaus können Bremsen in Aufzuganlagen unter anderem auch dazu eingesetzt werden, ein Verlagern der Aufzugkabine mit übermäßig hohen Geschwindigkeiten (englisch: "overspeed protection") und/oder unbeabsichtigte Aufzugkabinenbewegungen (englisch: "unintended car movement protection") zu vermeiden.

Beispielsweise ist vorstellbar, dass es beim Betrieb einer Aufzuganlage zu Fehlfunktionen kommt, die dazu führen, dass die Aufzugkabine schneller als eine zulässige Höchstgeschwindigkeit aufwärts oder abwärts bewegt wird. Eine Aufwärtsbewegung kann dabei durch das mit der Aufzugkabine gekoppelte Gegengewicht, welches in der Regel eine höhere Masse besitzt als die leere Aufzugkabine, verursacht sein. Eine zu schnelle Verlagerungsbewegung kann hierbei zu potentiell gefährlichen Situationen führen.

Ferner ist beim Betrieb von Aufzuganlagen in der Regel beabsichtigt, die Aufzugkabine nicht zu verlagern, solange eine Aufzugtür, d.h. eine Aufzugkabinentür und/oder eine Aufzugschachttür, nicht vollständig geschlossen ist. Hierdurch soll unter anderem vermieden werden, dass Passagiere durch die teilweise offene Aufzugtür hindurch in einen gefährlichen Bereich zwischen Aufzugkabine und Aufzugschacht gelangen können und dort bei sich bewegender Aufzugkabine eventuell eingeklemmt werden können.

Allerdings kann es Ausnahmen von dieser Regel geben. Beispielsweise kann es im Rahmen eines Niveauausgleichs (englisch: "relevelling") gewünscht sein, eine Aufzugkabine bei einem Halt an einem Stockwerk stets so positioniert zu halten, dass ihr Boden bündig mit einem Stockwerkboden ist. Wenn Passagiere in die Aufzugkabine einsteigen oder aus dieser aussteigen, kann aufgrund des dabei bewirkten Lastwechsels und einer hiermit einhergehenden Längenänderung von die Aufzugkabine haltenden Tragmitteln eine geringfügige Verlagerung der Aufzugkabine stattfinden. Um solche geringfügigen Verlagerungen von wenigen Zentimetern problemlos ausgleichen zu können, kann ein Bewegen der Aufzugkabine trotz offener Kabinentür zulässig sein, solange sich die Aufzugkabine noch innerhalb eines Toleranzbereichs oberhalb oder unterhalb einer beabsichtigten Halteposition befindet.

Als weitere Ausnahme von der obengenannten Regel kann vorgesehen sein, dass bereits kurz bevor eine Aufzugkabine eine beabsichtigte Halteposition erreicht, damit begonnen werden darf, eine Aufzugtür zu öffnen. Hierdurch kann ein Öffnungsvorgang und somit ein Ein- und Aussteigen von Passagieren, während die Aufzugkabine an der Halteposition zum Stehen gebracht wurde, beschleunigt werden. Auch in diesem Fall soll ein vorgezogenes Öffnen und/oder in analoger Weise ein nachgezogenes Schließen der Aufzugtür und somit ein Verlagern der Aufzugkabine mit nicht vollständig geschlossener Aufzugtür ausschließlich zulässig sein, solange sich die Aufzugkabine innerhalb eines Toleranzbereichs oberhalb oder unterhalb einer beabsichtigten Halteposition befindet.

Insbesondere bei den beiden zuletzt genannten Konstellationen kann es erforderlich sein, zuverlässig erkennen zu können, ob eine Verlagerungsbewegung der Aufzugkabine mit nicht vollständig geschlossener Aufzugtür als unbeabsichtigte Bewegung zu werten ist oder ob sie zum Beispiel unter eine der beiden zuvor genannten Ausnahmeregelungen fällt.

Ein sehr einfacher Ansatz hierfür ist, zu prüfen, ob sich die Aufzugkabine innerhalb des Toleranzbereichs oberhalb oder unterhalb der beabsichtigten Halteposition befindet. Falls dies nicht zutrifft, kann beispielsweise automatisch die Bremse der Aufzuganlage aktiviert werden. Beispielsweise kann dies dadurch geschehen, dass eine Sicherheitskette der Aufzuganlage unterbrochen wird, wodurch automatisch eine Leistungsversorgung zu der Bremse unterbrochen wird und daraufhin die Bremse aktiviert wird.

Allerdings kann ein solcher Ansatz dazu führen, dass sich die Aufzugkabine bereits mit einer relativ hohen Geschwindigkeit bewegt, wenn sie den Toleranzbereich oberhalb bzw. unterhalb der beabsichtigten Halteposition verlässt. Um zu vermeiden, dass die Aufzugkabine dann übermäßig weit von der Halteposition weg verfahren wird und sich hierdurch potenziell gefährliche Situationen einstellen, wie beispielsweise ein Freiraum zwischen der Aufzugkabine und einer Aufzugschachtöffnung, durch die schlimmstenfalls eine Person bei geöffneter Aufzugschachttür in den Aufzugschacht fallen könnte, ist anzustreben, die Aufzugkabine in einem solchen Fall möglichst schnell stoppen zu können.

Es wurde erkannt, dass ein Stoppen der Verlagerungsbewegung einer Aufzugkabine bei herkömmlichen Aufzuganlagen nicht in allen Fällen ausreichend schnell durchführbar ist.

Es kann unter anderem ein Bedarf an einem Verfahren zum Steuern einer Bremse einer Aufzuganlage bestehen, mithilfe dessen eine Verlagerungsbewegung einer Aufzugkabine schnell und zuverlässig gestoppt werden kann. Ferner kann ein Bedarf an einer entsprechend konfigurierten Bremssteuerung und einer damit ausgestatteten Aufzuganlage bestehen.

Einem solchen Bedarf kann durch einen Gegenstand gemäß einem der unabhängigen Ansprüche entsprochen werden. Vorteilhafte Ausführungsformen sind in den abhängigen Ansprüchen definiert sowie in der nachfolgenden Beschreibung angegeben.

Gemäß einem ersten Aspekt der Erfindung wird ein Verfahren zum Steuern einer Bremse einer Aufzuganlage vorgeschlagen. Die Bremse weist dabei einen Anker auf, der von einem Elektromagneten zum Lösen der Bremse aus einer Bremsposition entgegen einer Federkraft in eine Löseposition zu ziehen ist. Das Verfahren umfasst zumindest die folgenden Schritte, vorzugsweise in der angegebenen Reihenfolge:
Anlegen einer elektrischen anfänglichen Spannung an den Elektromagneten und Messen eines dem Elektromagneten daraufhin zugeführten Stroms; und
Reduzieren der an den Elektromagneten angelegten Spannung auf eine Haltespannung in Reaktion auf ein Erkennen eines typischen zeitlichen Verhaltens des gemessenen Stroms, welches charakteristischer Weise auftritt, wenn der Anker sich aus der Bremsposition in die Löseposition bewegt.

Gemäß einem zweiten Aspekt der Erfindung wird eine Bremssteuerung zum Steuern einer Bremse einer Aufzuganlage vorgeschlagen, wobei die Bremse einen Anker aufweist, der von einem Elektromagneten zum Lösen der Bremse aus einer Bremsposition entgegen einer Federkraft in eine Löseposition zu ziehen ist, wobei die Bremssteuerung dazu konfiguriert ist, ein Verfahren gemäß einer Ausführungsform des ersten Aspekts der Erfindung zu steuern oder zu kontrollieren.

Gemäß einem dritten Aspekt der Erfindung wird eine Aufzuganlage mit einer Bremse, die einen Anker aufweist, der von einem Elektromagneten zum Lösen der Bremse aus einer Bremsposition entgegen einer Federkraft in eine Löseposition zu ziehen ist, und einer Bremssteuerung gemäß einer Ausführungsform des zweiten Aspekts der Erfindung vorgeschlagen.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend kurz angegeben, kann es für einen sicheren Betrieb einer Aufzuganlage wichtig sein, die sich bewegende Aufzugkabine mithilfe einer Bremse schnell und effizient abbremsen zu können.

Ein durch eine Bremse bewirkter Bremsvorgang wird im Allgemeinen durch mehrere Faktoren beeinflusst. Unter anderem ist einerseits wichtig, wie schnell die zuvor gelöste Bremse bei Erkennen einer Bremsnotwendigkeit aktiviert werden kann. Andererseits ist von Einfluss, wie effizient die aktivierte Bremse die Aufzugkabine dann abbremsen kann. Beide Faktoren beeinflussen, wie schnell die Aufzugkabine nach Erkennen der Bremsnotwendigkeit gestoppt werden kann.

Wie schnell eine Bremse aktivierbar ist, hängt unter anderem von strukturellen und funktionalen Eigenschaften der Bremse selbst ab. Für Bremsen von Aufzuganlagen wird in der Regel eine Bauform eingesetzt, bei der ein Anker mithilfe eines Elektromagneten, d.h. mithilfe einer Spule, in die der Anker beispielsweise eintauchen kann, zwischen einer Bremsposition und einer Löseposition verlagert werden kann. Solange der Elektromagnet nicht aktiviert, das heißt bestromt, wird, übt er keine Kraft auf den Anker aus. In dieser Konfiguration wird der Anker beispielsweise durch ein Federelement mit einer Federkraft in die Bremsposition gedrückt. In dieser Bremsposition presst der Anker beispielsweise Bremsklötze gegen eine sich relativ zu der Bremse bewegende Komponente wie beispielsweise eine sich zwischen den Bremsklötzen drehbare Antriebsscheibe oder eine sich relativ zu den Bremsklötzen verlagerbare Bremsschiene. Somit wird die Aufzugkabine, wenn die Bremse in ihrer Bremsposition ist, in ihrer Verlagerungsbewegung gebremst bzw. an einer Stoppposition gehalten. Um die Bremse zu lösen, kann der Anker mithilfe des Elektromagneten in die Löseposition gezogen werden. In dieser Löseposition sind die von dem Anker betätigten Bremsklötze weg von der sich relativ zu der Bremse bewegenden Komponente gezogen, sodass keine Bremswirkung generiert wird.

Bei einer derartigen Bremse umfasst das Aktivieren der Bremse prinzipiell zwei Schritte. Zunächst muss eine Kraftwirkung des Elektromagneten auf den Anker weitgehend aufgehoben werden. Hierzu muss der durch die Spule des Elektromagneten fließende elektrische Strom ausreichend reduziert werden, bis die von dem Elektromagneten generierte Kraft zumindest geringer wird als die in entgegengesetzter Richtung auf den Anker wirkende Federkraft. Anschließend muss die Federkraft ausreichend stark werden, um mit dem Anker die Bremsklötze geeignet stark gegen die sich relativ zu der Bremse bewegenden Komponenten pressen zu können.

Mit dem hierin vorgestellten Ansatz wird hauptsächlich derjenige Aspekt des von der Bremse zu bewirkenden Bremsvorgangs adressiert, bei dem bei Erkennen einer Bremsnotwendigkeit die von dem Elektromagneten erzeugte Kraftwirkung auf den Anker schnell und effizient reduziert werden soll.

Generell hängt die Kraft, mit der der Elektromagnet den Anker hin zu der Löseposition zieht, von der Stärke eines durch den Elektromagneten bewirkten Magnetfelds und somit von einer in der Spule des Elektromagneten bewirkten elektrischen Stromdichte ab. Um die Bremse schnell und effizient lösen zu können, wird meist zu Beginn eines Lösevorgangs eine hohe anfängliche elektrische Spannung an die Spule des Elektromagneten angelegt. Dabei kommt auch zum Tragen, dass die Bremse häufig derart strukturell ausgebildet ist, dass, solange die Bremse in der Bremsposition ist, zwischen dem Anker und dem Elektromagnet ein größerer Luftspalt ist, der dann, wenn der Anker in die Löseposition gezogen wird, verringert wird. Dieser anfängliche Luftspalt verringert die anfänglich auf den Anker durch den Elektromagneten ausgeübte Kraft während eines Lösevorgangs. Da diese Kraft jedoch größer als die auf den Anker wirkende Federkraft sein muss, um den Anker in die Löseposition ziehen zu können, wird zu Anfang des Lösevorgangs zunächst eine höhere Stromstärke in der Spule des Elektromagneten benötigt und dementsprechend eine höhere anfängliche Spannung angelegt.

Sobald der Anker in die Löseposition gezogen wurde, ist der Luftspalt zwischen dem Anker und dem Elektromagneten kleiner, sodass es zu einer größeren Kraftwirkung auf den Anker kommt. Dies kann dann dazu genutzt werden, um die durch die Spule des Elektromagneten fließende Stromstärke wieder zu reduzieren. Mit einer derart reduzierten Stromstärke kann jedoch immer noch eine ausreichende Kraft auf den Anker ausgeübt werden, um diesen in der Halteposition zu halten. Durch das Reduzieren der Stromstärke kann unter anderem eine übermäßige Wärmeentwicklung in dem Elektromagneten vermieden werden.

Anders ausgedrückt kann zu Anfang eines Lösevorgangs zunächst eine sogenannte Übererregung (englisch: overexcitation) der Spule des Elektromagneten bewirkt werden durch Anlegen einer hohen anfänglichen elektrischen Spannung. Wenn der Anker dann in die Löseposition gezogen wurde, kann diese elektrische Spannung auf eine Haltespannung reduziert werden.

Für die Art und Weise, wie und/oder wann die an die Spule des Elektromagneten angelegte elektrische Spannung von der hohen anfänglichen Spannung auf die niedrigere Haltespannung reduziert wird, gibt es bisher verschiedene technische Ansätze. Bei einem einfachen Ansatz wird die Spannung nach einem festgelegten Zeitintervall, beispielsweise nach einer Sekunde, auf die Haltespannung reduziert. Bei einem aufwändigeren Ansatz kann beispielsweise mithilfe von Sensoren oder Schaltern ermittelt werden, ob der Anker oder die mit ihm gekoppelten Bremsklötze in der Bremsposition oder in der Löseposition sind. Während eines Lösevorgangs kann die an die Spule des Elektromagneten angelegte Spannung reduziert werden, sobald von den Sensoren bzw. Schaltern erkannt wurde, dass der Anker in die Löseposition gezogen wurde.

Allerdings ist für den letztgenannten Ansatz zusätzliche Hardware in Form von Sensoren bzw. Schaltern notwendig, wodurch Kosten und/oder Komplexität der Bremse erhöht werden können. Außerdem können die Sensoren bzw. Schalter als relativ komplexe Bauelemente einem Verschleiß und/oder einem Risiko von Defekten unterliegen.

Der erstgenannte Ansatz lässt sich im Vergleich hierzu technisch einfacher realisieren. Allerdings erfolgt bei diesem Ansatz das Reduzieren der angelegten Spannung auf die Haltespannung unabhängig davon, ob bzw. wann der Anker in die Löseposition bewegt wurde. Die angelegte Spannung kann somit gegebenenfalls unnötig spät reduziert werden oder im umgekehrten, schlimmeren Fall kann die angelegte Spannung auf die Haltespannung reduziert werden, bevor der Anker in die Löseposition gezogen wurde, sodass es womöglich zu keinem Lösen des Ankers kommt.

Mit dem hierin vorgestellten Ansatz wird angestrebt, die an den Elektromagneten angelegte Spannung möglichst früh auf die Haltespannung zu reduzieren, ohne dabei zu riskieren, dass der Anker durch ein zu frühes Reduzieren der angelegten Spannung nicht in die Löseposition gezogen wird. Dabei soll aber auf komplexe Komponenten wie Schalter oder Sensoren vorzugsweise verzichtet werden.

Stattdessen wird angeregt, die elektrische Stromstärke, die in der Spule des Elektromagneten bewirkt wird, wenn an diese die anfängliche elektrische Spannung angelegt wird, zu messen, um hieraus eine Information über das Verhalten des Ankers ableiten zu können.

Es wurde nämlich erkannt, dass der zeitliche Verlauf dieser gemessenen Stromstärke sich in charakteristischer Weise verändert, wenn sich der Anker aus der Bremsposition in die Löseposition bewegt. Mit anderen Worten kann durch Messen der in dem Elektromagneten während eines Lösevorgangs sich einstellenden elektrischen Stromstärke anhand von dabei charakteristischerweise auftretenden zeitlichen Stromstärkemustern erkannt werden, wenn sich der Anker der Bremse in die Löseposition bewegt. Dies kann dann als Auslöser oder Trigger dafür wirken, die hohe anfängliche Spannung an dem Elektromagneten auf die Haltespannung zu reduzieren. Das Reduzieren der angelegten Spannung kann somit erfolgen, sobald der Anker die Löseposition erreicht hat und somit die hohe anfängliche Spannung nicht mehr benötigt wird, sondern die niedrigere Haltespannung genügt, um den Anker in der Löseposition zu halten.

Dieses frühzeitige Reduzieren der angelegten Spannung kann nun auf folgende Weise dazu beitragen, bei Erkennen einer Bremsnotwendigkeit das Aktivieren der Bremse zu beschleunigen.

Während die Bremse gelöst ist, muss durch die Spule des Elektromagneten ein elektrischer Strom fließen, um mit dem hierdurch generierten Magnetfeld den Anker der Bremse in Richtung der Löseposition zu ziehen und ihn somit in der Löseposition zu halten. Um die Bremse dann zu aktivieren, muss dieser elektrische Strom und damit das generierte Magnetfeld signifikant reduziert werden, um den Anker aus der Löseposition freizugeben, damit dieser aufgrund der entgegengesetzt wirkenden Federkraft in die Bremsposition verlagert wird.

Die Spule des Elektromagneten besitzt jedoch eine Induktivität, d.h., es wird Energie in dem von ihr generierten Magnetfeld gespeichert. Zum Reduzieren des generierten Magnetfelds muss diese Energie dissipiert, d.h. verbraucht bzw. umgewandelt, werden.

Wenn ein elektrischer Stromfluss durch eine Induktivität reduziert bzw. abgeschaltet werden soll, muss der in der Induktivität fließende Strom beispielsweise in einen zusätzlichen Strompfad umgelenkt werden, da ansonsten hohe induzierte Spannungen Schäden erzeugen könnten. Zu diesem Zweck kann beispielsweise eine parallel zu der Induktivität geschaltete Diode und optional ein separater elektrischer Widerstand eingesetzt werden. Die in der Spule des Elektromagneten gespeicherte Energie kann somit dissipiert werden, sobald die angelegte Spannung reduziert bzw. abgeschaltet wird, indem es bei einem Stromfluss durch den mit der parallelen Diode bewirkten Stromkreis zu Verlusten aufgrund des elektrischen Widerstands innerhalb der Spule selbst sowie möglicherweise zu zusätzlichen Verlusten durch den separaten elektrischen Widerstand kommt.

Wie lange es dabei dauert, bis die in dem Elektromagneten gespeicherte Energie so weit reduziert ist, dass die von dem Elektromagneten bewirkte Kraft nicht mehr ausreicht, um den Anker in der Löseposition zu halten und der Anker sich somit in die Bremsposition bewegt, hängt maßgeblich von der Menge an in dem Elektromagneten gespeicherter Energie ab.

Die in einer Spule gespeicherte Energie W ist hierbei proportional zum Quadrat der durch die Spule fließenden Stromstärke I sowie zu der Induktivität L der Spule. Allgemein gilt W = (I² * L)/2. Wenn die Spule zum Lösen der Bremse an eine konstante Spannung U angeschlossen ist, ist die durch die Spule fließende Stromstärke I lediglich durch den elektrischen Widerstand R der Spule begrenzt. Es gilt I = U / R. Für die gespeicherte Energie W ergibt sich somit W = (U² * L) / (2 * R²). Anders ausgedrückt hängt die in der Spule gespeicherte Energie W quadratisch von der an die Spule angelegten Spannung U ab.

Je höher somit die an die Spule des Elektromagneten angelegte Spannung ist, desto mehr Energie muss dissipiert werden, bevor der Elektromagnet den Anker wieder freigegeben kann und diesen in seine Bremsposition bewegen lässt. Wenn beispielsweise eine doppelt so hohe Spannung (2 * U1) an die Spule des Elektromagneten angelegt wird, muss bei einem anschließenden Abschalten des Elektromagneten eine viermal höhere Energie dissipiert werden, als bei dem Fall, bei dem lediglich eine einfache Spannung U1 angelegt wird.

Je geringer die während eines Lösevorgangs an den Elektromagneten zum Lösen des Ankers in die Löseposition angelegte Spannung gewählt wird bzw. je früher eine zunächst höher eingestellte anfängliche elektrische Spannung auf eine niedrigere Haltespannung reduziert wird, umso kürzer kann die Dauer gehalten werden, die benötigt wird, um die in dem Elektromagneten bereits gespeicherte Energie abzubauen und somit die Bremse mit ihrem Anker wieder in ihre Bremsposition zu bringen, d.h. um die Bremse zu aktivieren.

Bei dem hierin vorgestellten Verfahren zum Steuern einer Bremse kann der Zeitpunkt, zu dem die an den Elektromagneten der Bremse angelegte anfänglich höhere elektrische Spannung auf die niedrigere Haltespannung reduziert wird, optimal früh gewählt werden.

Hierzu kann anhand eines typischen zeitlichen Verhaltens der in dem Elektromagneten geführten gemessenen Stromstärke erkannt werden, wann sich der Anker in die Löseposition bewegt hat, um daraufhin zu einem sehr frühen Zeitpunkt die angelegte Spannung auf die Haltespannung reduzieren zu können.

Somit kann auch in einer Konstellation, bei der die Bremse zunächst gelöst werden sollte und somit eine elektrische Spannung an deren Elektromagnet angelegt wurde, ein schnelles Re-Aktivieren der Bremse bewirkt werden, da die in der Spule gespeicherte und dann abzubauende Energie im Wesentlichen auf diejenige Energie begrenzt werden kann, die benötigt wird, um den Anker in seiner Löseposition zu halten.

Im Gegensatz hierzu wurde herkömmlich eine hohe anfängliche Spannung deutlich länger an die Spule des Elektromagneten angelegt, sodass in der Spule eine höhere Energie gespeichert wurde, bevor dann zu einem späteren Zeitpunkt auf die Haltespannung reduziert wurde. Somit wurde bei herkömmlichen Ansätzen eine Zeit lang ein stärkeres Magnetfeld erzeugt, als dies zum Halten des Ankers notwendig war und somit eine höhere Energie in der Spule gespeichert, die für den Fall, dass genau in diesem Zeitraum die Bremse aktiviert werden sollte, dazu führte, dass die zum Abbauen dieser erhöhten Energie benötigte Zeit relativ lang war, sodass es zu einem verzögerten Aktivieren der Bremse kam.

Im Vergleich zu diesem herkömmlichen Ansatz kann somit mit dem hier vorgestellten Verfahren eine Aktivierung der Bremse zumindest in gewissen Konstellationen während eines zuvor initiierten Lösevorgangs beschleunigt werden.

Nachfolgend soll anhand von Beispielen erläutert werden, wie aufgrund des zeitlichen Verhaltens der gemessenen Stromstärke durch den Elektromagneten erkannt werden kann, wenn sich der Anker aus der Bremsposition in die Löseposition bewegt hat.

Das zeitliche Verhalten der an dem Elektromagneten gemessenen Stromstärke I(t), wenn eine elektrische Spannung an diesen angelegt wird, kann von unterschiedlichen Einflüssen beeinflusst sein. Prinzipiell nimmt diese Stromstärke mit der Zeit t kontinuierlich und abhängig von der Induktivität L bis zu einem Sättigungswert I0 zu.

Es gilt allgemein: I(t) = I0 * (1 - exp((t * R) / L)

Allerdings ist die Induktivität der Spule des Elektromagneten selbst während eines Lösevorgangs der Bremse nicht notwendigerweise konstant. Stattdessen hängt diese Induktivität im Allgemeinen von der Position des Ankers ab, insbesondere wenn dieser vollständig oder teilweise aus ferromagnetischem Material besteht. Wenn der Anker in der Bremsposition ist, befindet er sich meist relativ weit entfernt von der Spule, sodass deren Induktivität, während die Bremse geschlossen ist, relativ gering ist. Sobald sich der Anker in die Löseposition bewegt, kommt er der Spule näher bzw. taucht weiter in diese ein, sodass sich deren Induktivität erhöht, wenn die Bremse geöffnet wird.

Während eines Lösevorgangs, bei dem der Anker anfänglich von der Bremsposition dann hin zu der Löseposition bewegt wird, ändert sich somit mit der Zeit die Induktivität der Spule des Elektromagneten. Diese Änderung der Induktivität führt zu einem für den in der Bremse verwendeten Elektromagneten typischen Verhalten der durch dessen Spule fließenden Stromstärke, wenn sich der Anker von der Bremsposition in die Löseposition bewegt.

Gemäß dem ersten Aspekt der Erfindung kann beispielsweise als typisches zeitliches Verhalten ein Verringern der gemessenen Stromstärke bei anliegender anfänglicher Spannung zu erkennen sein.

Anders ausgedrückt kann zum Öffnen der Bremse die anfängliche Spannung an deren Elektromagnet angelegt werden. Daraufhin beginnt ein elektrischer Strom durch die Spule des Elektromagneten zu fließen. Die Stromstärke nimmt mit der Zeit zu, bis durch den Strom ein Magnetfeld generiert wird, das ausreichend stark ist, um den Anker aus seiner Bremsposition in seine Löseposition zu bewegen. Hierdurch ändert sich jedoch auch die Induktivität der Spule selbst, sodass der durch sie fließende elektrische Strom kurzzeitig abnimmt, bevor er dann wieder zunimmt. Dieses kurzzeitige Verringern der an dem Elektromagneten gemessenen Stromstärke kann somit als Indiz dafür verwendet werden, dass sich der Anker aus der Bremsposition in die Löseposition bewegt hat. Bei Erkennen dieses kurzzeitigen Verringerns der Stromstärke kann somit die angelegte Spannung auf die Haltespannung reduziert werden. Ein Umkehrpunkt im zeitlichen Verlauf der Stromstärke, das heißt derjenige Punkt, ab dem die Stromstärke zumindest kurzzeitig abnimmt, kann technisch verhältnismäßig einfach erkannt werden. Die aktuell vorherrschende Stromstärke kann dann stabilisiert werden oder die Haltespannung angelegt werden.

Alternativ kann gemäß dem ersten Aspekt der Erfindung als typisches zeitliches Verhalten ein Wiederansteigen nach vorangehendem Absinken des gemessenen Stroms bei anliegender anfänglicher Spannung zu erkennen sein.

Mit anderen Worten kann nicht das kurzzeitige Absinken des gemessenen Stroms, sondern das anschließende Ansteigen des Stroms durch die Spule des Elektromagneten als Indiz dafür verwendet werden, wann sich der Anker aus der Bremsposition hin zu der Löseposition bewegt hat. Zu diesem Zeitpunkt ist die durch die Spule fließende Stromstärke geringer als zu Anfang des Absinkens des Stroms. Auch ein solches Wiederansteigen des Stroms kann technisch einfach erkannt werden. Die dabei aktuell vorherrschende Stromstärke kann dann stabilisiert werden oder die Haltespannung angelegt werden.

Als weitere Möglichkeit kann gemäß dem ersten Aspekt der Erfindung ein typischer zeitlicher Verlauf einer Stromstärke bei anliegender anfänglicher Spannung vorab durch eine Methode ausgewählt aus einer Gruppe umfassend Berechnen, Simulieren und Modellieren ermittelt werden. Als typisches zeitliches Verhalten kann dann ein Übereinstimmen, innerhalb einer vorbestimmten Toleranz, des gemessenen Stroms bei anliegender anfänglicher Spannung mit dem ermittelten typischen zeitlichen Verlauf der Stromstärke zu erkennen sein.

Anders ausgedrückt kann ein zeitlicher Verlauf, mit dem sich die durch die Spule des Elektromagneten fließende Stromstärke ändert, wenn die hohe anfängliche Spannung angelegt wird, berechnet, simuliert oder modelliert werden. Dabei kann berücksichtigt werden, dass sich im Verlaufe des Lösevorgangs die Induktivität der Spule ändert, wenn sich der Anker aus der Bremsposition in die Löseposition verlagert. Das hierdurch berechnete, simulierte oder modellierte zeitliche Verhalten der Stromstärke kann quasi als Referenz herangezogen werden. Die tatsächlich an dem Elektromagneten gemessene Stromstärke kann mit diesem Referenzverhalten verglichen werden. Wenn sich dabei innerhalb einer vorgebbaren Toleranz eine Übereinstimmung beider zeitlicher Verhalten beobachten lässt, kann hieraus auf die Bewegung des Ankers von der Bremsposition in die Halteposition rückgeschlossen werden. Dies kann wiederum als Auslöser oder Trigger dafür dienen, die angelegte Spannung auf die Haltespannung zu reduzieren bzw. die Stromstärke auf niedrigem Niveau zu stabilisieren. Wenn sich dabei eine Abweichung ausserhalb der vorgebbaren Toleranz beider zeitlicher Verhalten beobachten lässt, kann hieraus auf einen fehlerhaften Zustand der Bremse geschlossen werden. Dies kann wiederum als Auslöser oder Trigger dafür dienen, ein Fehlersignal auszugeben, welches dazu genutzt werden kann einen Servicetechniker über die Notwendigkeit eines Serviceeinsatzes zu informieren oder bei einer signifikanten Abweichung die Aufzugsanlage unter Ausgabe eines Fehlersignals ganz zu stoppen. Eine solche Abweichung kann sich inbesondere beim Nennstrom ergeben. Diese kann beispielsweie dann Auftreten, wenn ein Windungskurzschluss vorliegt oder die Windungen überhitzt sind, was zu einem Bremsstrom führt, welcher höher ist als vorgesehene Nennstrom. Eine solche Abweichung kann auch durch ein mechanisches Verklemmen der Bremse verursacht werden.

Gemäß einer Ausführungsform des ersten Aspektes der Erfindung kann die Haltespannung größer oder gleich einer elektrischen Spannung sein, die an den Elektromagneten anzulegen ist, um den Anker in der Löseposition zu halten.

Mit anderen Worten kann die Haltespannung derart gewählt sein, dass sie ausreicht, um den Anker durch den Elektromagneten in seiner Löseposition zu halten, wenn dieser die Löseposition zuvor erreicht hat. Die Haltespannung braucht dabei nicht so hoch gewählt sein, dass sie ausreichen würde, um den Anker aus der Bremsposition hinzu der Löseposition zu bewegen. Hierzu soll jedoch die zu Beginn des Lösevorgangs angelegte höhere anfängliche Spannung in der Lage sein.

Gemäß einer Ausführungsform des ersten Aspektes der Erfindung kann dabei die Haltespannung 10 % bis 90% , vorzugsweise wenigstens 80 %, wenigstens 70 % oder wenigstens 60 %, besonders bevorzugt wenigstens 50% oder wenigsten 40% oder wenigsten 30% oder wenigstens 20% niedriger sein als die anfängliche Spannung.

Mit einer derart im Vergleich zu der anfänglichen Spannung erheblich niedrigeren Haltespannung kann, wie oben beschrieben, die in der Spule des Elektromagneten gespeicherte Energie auf ein niedrigeres Niveau begrenzt werden. Dementsprechend kann diese Energie, wenn die Bremse plötzlich wieder aktiviert werden soll, schnell abgebaut werden und damit der Anker getrieben von der Federkraft wieder in die Bremsposition bewegt werden.

Gemäß einer Ausführungsform des ersten Aspektes der Erfindung kann bei Erkennen des typischen zeitlichen Verhaltens der gemessenen Stromstärke ein Bremslösebestätigungssignal ausgegeben werden.

Anders ausgedrückt kann bei Erkennen des typischen zeitlichen Verhaltens der Stromstärke, welches auftritt, wenn der Anker während eines Lösevorgangs aus der Bremsposition in die Löseposition gezogen wird, nicht nur die an den Elektromagneten angelegte anfängliche Spannung auf die Haltespannung reduziert werden, sondern ergänzend ein Bremslösebestätigungssignal ausgegeben werden. Dieses Bremslösebestätigungssignal kann beispielsweise an andere Komponenten der Aufzuganlage weitergeleitet werden und dort analysiert werden. Aufgrund dieses Signals kann bestätigt werden, dass die Bremse gelöst wurde, d.h. das tatsächlich der Anker der Bremse aus der Bremsposition in die Löseposition bewegt wurde.

Durch Überwachen des Bremslösebestätigungssignals kann somit erkannt werden, dass nicht nur ein Lösevorgang initiiert wurde, indem eine Spannung an den Elektromagneten der Bremse angelegt wurde, sondern dass es tatsächlich zu einem Verlagern des Ankers und somit zu einem Lösen der Bremse gekommen ist. Das ausgegebene Bremslösebestätigungssignal kann dabei ähnlich wirken wie ein Signal von Sensoren oder Schaltern, wie sie in herkömmlichen Bremsen zum Überwachen des aktuellen Zustands der Bremse betreffend die aktuelle Position ihres Ankers genutzt werden. Allerdings sind hierzu keine zusätzlichen Sensoren oder Schalter, sondern lediglich eine Messung einer Stromstärke und einen Analyse von deren zeitlichen Verhalten notwendig.

Ausführungsformen des hierin vorgestellten Verfahrens zum Steuern einer Bremse einer Aufzuganlage können in einer Ausführungsform einer Bremssteuerung gemäß dem zweiten Aspekt der Erfindung umgesetzt, gesteuert oder kontrolliert werden. Die Bremssteuerung kann hierzu eine Strommesseinrichtung aufweisen, mithilfe derer die in dem Elektromagneten der Bremse fließende Stromstärke gemessen werden kann. Die Bremssteuerung kann ferner über eine geeignete Analyseeinrichtung verfügen, mithilfe derer die gemessene Stromstärke analysiert werden kann. Insbesondere kann die Analyseeinrichtung dazu konfiguriert sein, in der gemessenen Stromstärke zeitliche Verhaltensmuster zu erkennen, die charakteristischerweise auftreten, wenn der Anker der Bremse sich aus der Bremsposition in die Löseposition bewegt. Hierzu kann die Analyseeinrichtung beispielsweise Umkehrpunkte, Gradienten, lokale Extrema oder Ähnliches in einem zeitlichen Verlauf der Stromstärke erkennen. Alternativ kann in der Analyseeinrichtung ein zuvor berechnetes, simuliertes oder modelliertes typisches zeitliches Verhalten der Stromstärke abgespeichert sein und ein dann tatsächlich gemessenes zeitliches Verhalten der Stromstärke mit dieser Referenz verglichen werden, um Übereinstimmungen erkennen zu können.

Eine derart ausgestaltete Bremssteuerung kann in einer Aufzuganlage dazu eingesetzt werden, eine Spannungsversorgung zu dem Elektromagneten der Bremse zu steuern. Die Spannungsversorgung kann dabei dazu ausgelegt sein, von der Bremssteuerung gesteuert zwischen einer anfänglichen hohen Spannung und einer niedrigeren Haltespannung zu wechseln. Alternativ kann die Spannungsversorgung an getrennten Ausgängen einmal die anfängliche hohe Spannung und einmal die niedrigere Haltespannung bereitstellen und die Bremssteuerung kann eine Schalteinrichtung steuern, mithilfe derer eine dieser Spannungen an den Elektromagneten der Bremse weitergeleitet wird.

Es wird darauf hingewiesen, dass einige der möglichen Merkmale und Vorteile der Erfindung hierin mit Bezug auf unterschiedliche Ausführungsformen des erfindungsgemäßen Verfahrens zum Steuern einer Bremse einer Aufzuganlage einerseits und der zu dessen Umsetzung konfigurierten Bremssteuerung andererseits beschrieben sind. Ein Fachmann erkennt, dass die Merkmale im Schutzumfang der beigefügten Ansprüche in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Bremse einer Aufzuganlage gemäß einer Ausführungsform der vorliegenden Erfindung.
Fig. 2 veranschaulicht eine Stromstärke, wie sie sich in Abhängigkeit von der Zeit in einem Elektromagneten einer Bremse einer Aufzuganlage gemäß einer Ausführungsform der vorliegenden Erfindung einstellt.
Fig. 3 veranschaulicht ein Schaltdiagramm einer Bremssteuerung zum Steuern einer Bremse einer Aufzuganlage gemäß einer Ausführungsform der vorliegenden Erfindung.

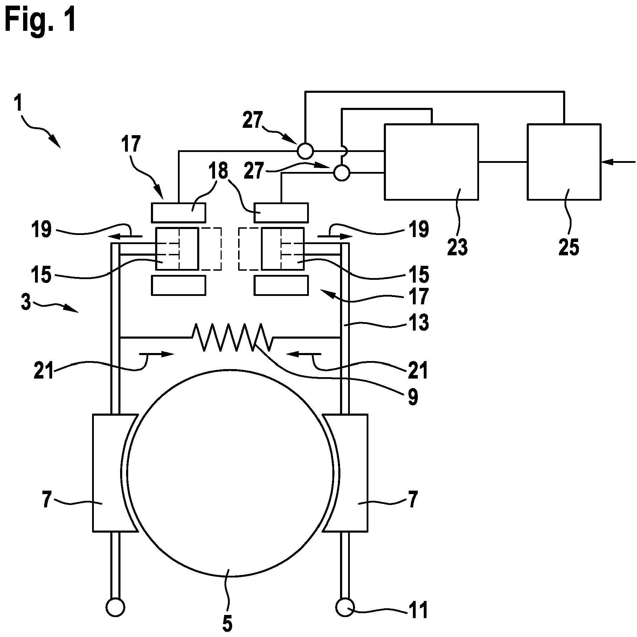

Die Figuren sind lediglich schematisch und nicht maßstabsgetreu. Gleiche Bezugszeichen bezeichnen in den verschiedenen Figuren gleiche oder gleichwirkende Merkmale Fig. 1 zeigt eine Bremse 3 einer Aufzuganlage 1 gemäß einer Ausführungsform der Erfindung. Die Aufzuganlage 1 kann hierbei verlagerbare Komponenten wie eine Aufzugkabine und/oder ein Gegengewicht aufweisen, welche beispielsweise über riemenartige Tragmittel gehalten und verlagert werden können (in der Figur aus Übersichtlichkeitsgründen nicht veranschaulicht). Die Tragmittel können dabei mittels einer Traktionsscheibe 5 verlagert werden.

Um eine Verlagerungsbewegung der Aufzugkabine und/oder des Gegengewichts bremsen zu können, kann die Bremse 3 mit Bremsklötzen 7 beispielsweise gegen eine Umfangsoberfläche der Traktionsscheibe 5 gepresst werden. Hierzu können die Bremsklötze an Hebeln 13 angebracht sein, die beispielsweise jeweils um ein Lager 11 verschwenkt werden können. Eine Anpresskraft kann dabei beispielsweise durch ein Federelement 9 erzeugt werden. Aus Gründen einer symmetrischen Krafterzeugung sind in dem dargestellten Beispiel zwei Bremsklötze 7 mit zugehörigen Hebeln 13 beidseitig der Traktionsscheibe 5 dargestellt.

An den Lagern 11 entgegengesetzten Enden weisen die Hebel 13 der Bremse 3 jeweils einen Anker 15 auf. Der Anker 15 kann jeweils mit einem Elektromagneten 17 in einer Richtung 19 entgegen der Richtung 21 der von dem Federelement 9 bewirkten Federkraft bewegt werden. Hierzu kann an den Elektromagneten 17 von einer Spannungsquelle 23 eine Spannung angelegt werden, um in dem Elektromagneten 17 durch den hierdurch bewirkten elektrischen Strom ein Magnetfeld zu erzeugen, mit dem der Anker 15 angezogen werden kann. Der Anker 15 kann dadurch entgegen der von dem Federelement 9 bewirkten Federkraft in die in Fig. 1 dargestellte Löseposition gezogen werden (die Bremsposition des Ankers 15 ist in Fig. 1 gestrichelt dargestellt). Hierdurch werden die Hebel 13 und die Bremsklötze 7 lateral weg von der Traktionsscheibe 5 bewegt und somit die Bremse 3 gelöst.

Um den Anker 15 aus der Bremsposition in seine Löseposition zu ziehen, wird mithilfe der Spannungsquelle 23 zunächst eine relativ hohe anfängliche elektrische Spannung an den jeweiligen Elektromagneten 17 angelegt. Die anfängliche Spannung muss unter anderem deswegen hoch sein, weil der Anker 15 in der Bremsposition teilweise aus der Spule 18 des Elektromagneten 17 heraussteht, sodass das von der Spule 18 erzeugte Magnetfeld eine weniger starke Kraft auf den Anker 15 ausübt, als dies bei in die Spule 18 eingetauchtem Zustand der Fall wäre.

Erst nachdem der Anker 15 in die Spule 18 zumindest teilweise weiter hineingezogen wurde und somit seine Löseposition erreicht oder dieser zumindest nahe kommt, kann die anfängliche Spannung auf eine Haltespannung reduziert werden. In einem praktischen Beispiel kann die anfängliche Spannung etwa doppelt so hoch sein wie die Haltespannung. Beispielsweise kann die anfängliche Spannung etwa 200 V betragen, wohingegen die Haltespannung bei etwa 100 V liegen kann.

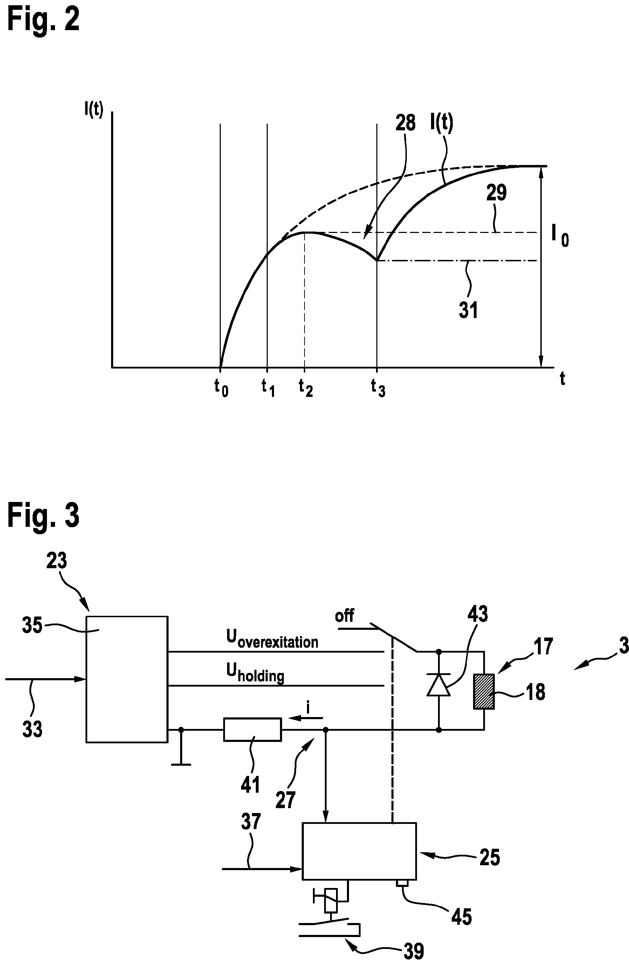

Fig. 2 zeigt einen typischen zeitlichen Verlauf einer Stromstärke I(t) durch die Spule 18, wie sie sich einstellt, wenn an den Elektromagneten 17 zum Zeitpunkt t₀ eine elektrische Spannung angelegt wird, um den Anker 15 von der Bremsposition in die Löseposition zu bewegen.

Ein typischer Verlauf der Stromstärke I(t), wie er sich einstellen würde, wenn die Induktivität der Spule 18 hierbei konstant wäre, ist gestrichelt dargestellt.

Allerdings ist die Induktivität der Spule 18 tatsächlich im Rahmen eines Lösevorgangs, um die Bremse 3 zu lösen, nicht konstant. Stattdessen ändert sich diese Induktivität, wenn sich der Anker 15 von der Bremsposition aus in die Löseposition bewegt und dabei tiefer in die Spule 18 eintaucht. Dementsprechend weist das sich tatsächlich einstellende Verhalten des in der Spule 18 während des Lösevorgangs einstellenden Stroms eine Art "Delle" 28 auf.

Ab einem Zeitpunkt t₁, ab dem sich der Anker 15 anfängt, hin zu der Spule 18 zu bewegen, nimmt die Induktivität der Spule 18 zu, sodass die tatsächlich durch die Spule 18 fließende Stromstärke I(t) geringer ist, als dies bei konstanter Induktivität der Fall wäre. Ab einem Zeitpunkt t₂ nimmt die Stromstärke I(t) dabei sogar temporär ab. Zu einem Zeitpunkt t₃ erreicht der Anker 15 dann seine Löseposition und die Induktivität der Spule 18 erreicht ihren Maximalwert. Von da an steigt die Stromstärke I(t) wieder an, bis sie ihren Sättigungswert I₀ erreicht.

Um die Bremse 3 zu aktivieren, muss der in dem Elektromagneten 17 fließende Strom reduziert bzw. abgeschaltet werden. Der Anker 15 verlagert sich daraufhin getrieben durch die Federkraft des Federelements 9 hin zu der Bremsposition (in Fig. 1 gestrichelt dargestellt), wodurch die Hebel 13 und Bremsklötze 7 hinzu der Traktionsscheibe 5 bewegt werden und deren Rotationsbewegung durch Reibung abbremsen.

Beim Reduzieren des durch den Elektromagneten 17 fließenden Stroms muss jedoch die in der Spule 18 gespeicherte Energie dissipiert werden. Die Menge dieser Energie ist umso größer, je höher die in der Spule 18 geführte Stromstärke I(t) ist.

Die am Anfang eines Lösevorgangs an den Elektromagneten 17 angelegte anfängliche Spannung ist deutlich größer als die Lösespannung, die benötigt wird, um den bereits in seine Löseposition verlagerten Anker 15 in der Löseposition zu halten. Um die in der Spule 18 geführte Stromstärke I(t) möglichst gering zu halten, wird daher angestrebt, zu einem möglichst frühen Zeitpunkt während des Lösevorgangs die anfängliche Spannung auf die Haltespannung zu reduzieren. Allerdings darf dies nicht zu einem Zeitpunkt geschehen, deutlich bevor der Anker 15 die Löseposition erreicht hat, da ansonsten ein Risiko besteht, dass der Anker 15 nicht mehr in die Löseposition gezogen wird bzw. dort gehalten wird. Insbesondere darf dies nicht vor dem oben genannten Zeitpunkt t₁ geschehen und sollte vorzugsweise erst ab dem oben genannten Zeitpunkt t₂ geschehen.

Daher wird vorgeschlagen, die an dem Elektromagneten 17 anliegende Spannung erst dann auf die Haltespannung zu reduzieren, wenn aufgrund einer Beobachtung der in dem Elektromagneten 17 fließenden Stromstärke I(t) erkannt werden kann, dass sich der Anker 15 aus der Bremsposition in die Löseposition bewegt.

Hierzu kann eine Bremssteuerung 25 beispielsweise mit Strommesseinrichtungen 27 die jeweils durch die Spule 18 des Elektromagneten 17 aktuell fließende Stromstärke I(t) messen und aufgrund dabei beobachteter charakteristischer Kurvenverläufe indirekt auf die Bewegung des Ankers 15 rückschließen und daraufhin die Spannungsquelle 23 geeignet zum Reduzieren der angelegten Spannung auf die Haltespannung ansteuern.

Beispielsweise kann die Bremssteuerung 25 erkennen, wenn sich die gemessene Stromstärke I(t) bei Anliegen der anfänglichen Spannung zu dem oben genannten Zeitpunkt t₂ beginnt zu verringern. Daraufhin kann die Stromstärke zu diesem Zeitpunkt stabilisiert werden, wie dies in Fig. 2 mit der gestrichelten Linie 29 dargestellt ist, bzw. die an den Elektromagneten 17 angelegte Spannung auf die Haltespannung reduziert werden.

Alternativ kann die Bremssteuerung 25 erkennen, wenn die gemessene Stromstärke I(t) bei anliegender anfänglicher Spannung zu dem oben genannten Zeitpunkt t₃ wieder beginnt, anzusteigen. Daraufhin kann die Stromstärke zu diesem Zeitpunkt stabilisiert werden, wie dies in Fig. 2 mit der strichpunktierten Linie 31 dargestellt ist, bzw. die an den Elektromagneten 17 angelegte Spannung auf die Haltespannung reduziert werden.

Fig. 3 zeigt eine schematische Darstellung einer Schaltung, bei der mithilfe einer Bremssteuerung 25 das Verhalten einer Bremse 3 gesteuert werden kann.

Ein als Spannungsquelle 23 wirkender AC/DC-Wandler 35 wird dabei von einer Leistungsversorgung 33 versorgt. Die Spannungsquelle 23 kann hierbei eine anfängliche hohe Spannung U_{overexcitation} sowie eine niedrigere Haltespannung U_{holding} generieren.

Zu Beginn eines Lösevorgangs schaltet die Bremssteuerung 25 zunächst von einem spannungslosen Zustand "off" in einen Zustand, bei dem die anfängliche hohe Spannung an die Spule 18 des Elektromagneten 17 angelegt wird. Dabei überwacht die Bremssteuerung 25 mithilfe der Strommesseinrichtung 27 den aktuell durch die Spule 18 fließenden Strom. Sobald die Stromstärke I(t) Charakteristiken aufweist, die typischerweise ein Bewegen des Ankers 15 aus der Bremsposition hinzu der Löseposition angeben, schaltet die Bremssteuerung 25 auf die niedrigere Haltespannung.

Gleichzeitig kann die Bremssteuerung 25 ein Bremslösebestätigungssignal generieren und beispielsweise an einem Signalausgang 45 ausgeben, um gegebenenfalls anderen Komponenten mitzuteilen, dass die Bremse 3 gelöst wurde. Hierdurch können Bremsbetätigungsüberwachungskontakte 39, wie sie herkömmlich in Bremsanlagen eingesetzt wurden, um die Betätigung der Bremse 3 überwachen zu können, und wie sie in Fig. 3 lediglich zum besseren Verständnis eingezeichnet sind, überflüssig werden.

Sofern die Bremssteuerung 25 im Rahmen eines Lösevorgangs kein Bewegen des Ankers 15 hin zu der Löseposition erkennen kann, beispielsweise aufgrund eines Defekts oder einer Fehlfunktion, kann vorgesehen sein, dass die Bremssteuerung 25 nach Ablauf einer vorgegebenen Wartezeit die anliegende Spannung automatisch auf die Haltespannung reduziert. Hierdurch kann vermieden werden, dass sich die Spule 18 aufgrund zu hoher Ströme übermäßig erhitzt. Gegebenenfalls kann die Bremssteuerung 25 daraufhin ein Fehlersignal ausgeben.

Sobald die Bremse 3 wieder aktiviert werden soll, erhält die Bremssteuerung 25 von einer Aufzugsteuerung 37 ein entsprechendes Aktivierungssignal. Daraufhin schaltet die Bremssteuerung 25 in einen Zustand "off", in dem keinerlei Spannung mehr von der Spannungsquelle 23 an die Spule 18 angelegt wird. Die Spule 18 baut daraufhin die in ihr gespeicherte Energie über die parallel geschaltete Diode 43 und den gegebenenfalls zusätzlich vorgesehenen separaten Shunt-Widerstand 41 ab. Hierdurch bricht auch das von der Spule 18 generierte Magnetfeld ein, sodass die Anker 15 aufgrund der von dem Federelement 9 bewirkten Federkraft hin zu ihrer Bremsposition bewegt werden und die Bremse 3 somit betätigt wird.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch im Schutzumfang der beigefügten Ansprüche in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Steuern einer Bremse (3) einer Aufzuganlage (1),
wobei die Bremse (3) einen Anker (15) aufweist, der von einem Elektromagneten (17) zum Lösen der Bremse (3) aus einer Bremsposition entgegen einer Federkraft in eine Löseposition zu ziehen ist,
wobei das Verfahren umfasst:
Anlegen einer elektrischen anfänglichen Spannung an den Elektromagneten (17) und Messen einer dem Elektromagneten (17) daraufhin zugeführten Stromstärke I(t);
**dadurch gekennzeichnet, dass** das Verfahren ferner umfasst:
Reduzieren der an den Elektromagneten (17) angelegten Spannung auf eine Haltespannung in Reaktion auf ein Erkennen eines typischen zeitlichen Verhaltens der gemessenen Stromstärke I(t), welches charakteristischerweise auftritt, wenn der Anker (15) sich aus der Bremsposition in die Löseposition bewegt,
wobei als typisches zeitliches Verhalten ein Verringern der gemessenen Stromstärke I(t) bei anliegender anfänglicher Spannung zu erkennen ist; oder
wobei als typisches zeitliches Verhalten ein Wiederansteigen nach vorangehendem Absinken der gemessenen Stromstärke I(t) bei anliegender anfänglicher Spannung zu erkennen ist; oder
wobei ein typischer zeitlicher Verlauf einer Stromstärke I(t) bei anliegender anfänglicher Spannung vorab durch eine Methode ausgewählt aus einer Gruppe umfassend Berechnen, Simulieren und Modellieren ermittelt wird und wobei als typisches zeitliches Verhalten ein Übereinstimmen innerhalb einer vorbestimmten Toleranz der gemessenen Stromstärke I(t) bei anliegender anfänglicher Spannung mit dem ermittelten typischen zeitlichen Verlauf der Stromstärke I(t) zu erkennen ist.

2. Verfahren nach Anspruch 1, wobei die Haltespannung größer oder gleich einer elektrischen Spannung ist, die an den Elektromagneten (17) anzulegen ist, um den Anker (15) in der Löseposition zu halten.

3. Verfahren nach einem der vorangehenden Ansprüche, wobei die Haltespannung wenigstens 10% niedriger ist als die anfängliche Spannung.

4. Verfahren nach einem der vorangehenden Ansprüche, wobei bei Erkennen des typischen zeitlichen Verhaltens der gemessenen Stromstärke I(t) ein Bremslösebestätigungssignal ausgegeben wird.

5. Bremssteuerung (25) zum Steuern einer Bremse (3) einer Aufzuganlage (1), wobei die Bremse (3) einen Anker (15) aufweist, der von einem Elektromagneten (17) zum Lösen der Bremse (3) aus einer Bremsposition entgegen einer Federkraft in eine Löseposition zu ziehen ist, **dadurch gekennzeichnet, dass** die Bremssteuerung (25) dazu konfiguriert ist, ein Verfahren gemäß einem der Ansprüche 1 bis 4 zu steuern oder zu kontrollieren.

6. Aufzuganlage (1) mit einer Bremse (3), die einen Anker (15) aufweist, der von einem Elektromagneten (17) zum Lösen der Bremse (3) aus einer Bremsposition entgegen einer Federkraft in eine Löseposition zu ziehen ist, und einer Bremssteuerung (25) gemäß Anspruch 5.

## Claims

1. Method for controlling a brake (3) of an elevator system (1),
wherein the brake (3) has an armature (15) which can be pulled by an electromagnet (17) counter to a spring force into a release position in order to release the brake (3) from a braking position,
wherein the method comprises:
applying an initial electrical voltage to the electromagnet (17) and measuring a current intensity I(t) then supplied to the electromagnet (17);
**characterized in that** the method further comprises:
reducing the voltage applied to the electromagnet (17) to a holding voltage in response to identifying a typical behavior over time of the measured current intensity I(t), which characteristically occurs when the armature (15) moves from the braking position into the release position,
wherein a reduction in the measured current intensity I(t) when the initial voltage is applied can be identified as typical behavior over time; or
wherein an increase occurring again after a previous lowering of the measured current intensity I(t) when the initial voltage is applied can be identified as typical behavior over time; or
wherein a typical curve over time of a current intensity I(t) when the initial voltage is applied is determined in advance by a method selected from a group comprising calculating, simulating and modeling, and wherein a match within a predetermined tolerance between the measured current intensity I(t) when the initial voltage is applied and the determined typical curve over time of the current intensity I(t) can be identified as typical time behavior.

2. Method according to claim 1, wherein the holding voltage is greater than or equal to an electrical voltage which can be applied to the electromagnet (17) in order to hold the armature (15) in the release position.

3. Method according to any of the preceding claims, wherein the holding voltage is at least 10% lower than the initial voltage.

4. Method according to any of the preceding claims, wherein when the typical behavior over time of the measured current intensity I(t) is identified, a brake release confirmation signal is output.

5. Brake controller (25) for controlling a brake (3) of an elevator system (1), wherein the brake (3) has an armature (15) which can be pulled by an electromagnet (17) counter to a spring force into a release position in order to release the brake (3) from a braking position, **characterized in that** the brake controller (25) is configured to control or monitor a method according to any of claims 1 to 4.

6. Elevator system (1) comprising a brake (3) which has an armature (15) which can be pulled by an electromagnet (17) counter to a spring force into a release position in order to release the brake (3) from a braking position, and a brake controller (25) according to claim 5.

## Revendications

1. Procédé permettant la commande d'un frein (3) d'une installation d'ascenseur (1),
dans lequel le frein (3) présente un ancrage (15) qui doit être tiré par un électroaimant (17) pour la libération du frein (3) hors d'une position de freinage, à l'encontre d'une force élastique, vers une position de libération,
dans lequel le procédé comprend :
l'application d'une tension électrique initiale à l'électroaimant (17) et la mesure d'une intensité de courant I(t) fournie ensuite à l'électroaimant (17) ;
**caractérisé en ce que** le procédé comprend en outre :
la réduction de la tension appliquée à l'électroaimant (17) jusqu'à une tension de maintien en réponse à une reconnaissance d'un comportement temporel typique de l'intensité de courant I(t) mesurée, lequel comportement se produit de manière caractéristique lorsque l'ancrage (15) se déplace de la position de freinage à la position de libération,
dans lequel on reconnaît comme comportement temporel typique une diminution de l'intensité de courant I(t) mesurée lorsque la tension initiale est appliquée ; ou
dans lequel on reconnaît comme comportement temporel typique une nouvelle augmentation après une baisse préalable de l'intensité de courant I(t) mesurée lorsque la tension initiale est appliquée ; ou
dans lequel une évolution temporelle typique d'une intensité de courant I(t) lorsque la tension initiale est appliquée est déterminée au préalable par un procédé choisi dans un groupe comprenant calcul, simulation et modélisation et dans lequel on reconnaît comme comportement temporel typique une concordance, à l'intérieur d'une tolérance prédéfinie, de l'intensité de courant I(t) mesurée lorsque la tension initiale est appliquée avec l'évolution temporelle typique déterminée de l'intensité de courant I(t).

2. Procédé selon la revendication 1, dans lequel la tension de maintien est supérieure ou égale à une tension électrique qui doit être appliquée à l'électroaimant (17) afin de maintenir l'ancrage (15) dans la position de libération.

3. Procédé selon l'une des revendications précédentes, dans lequel la tension de maintien est inférieure d'au moins 10 % à la tension initiale.

4. Procédé selon l'une des revendications précédentes, dans lequel, lors de la reconnaissance du comportement temporel typique de l'intensité de courant I(t) mesurée, un signal d'actionnement de libération de frein est émis.

5. Commande de frein (25) pour la commande d'un frein (3) d'une installation d'ascenseur (1), dans laquelle le frein (3) présente un ancrage (15) qui doit être tiré par un électroaimant (17) pour la libération du frein (3) hors d'une position de freinage, à l'encontre d'une force élastique, vers une position de libération, **caractérisée en ce que** la commande de frein (25) est configurée pour commander ou contrôler un procédé selon l'une des revendications 1 à 4.

6. Installation d'ascenseur (1) comportant un frein (3) qui présente un ancrage (15) qui doit être tiré par un électroaimant (17) pour la libération du frein (3) hors d'une position de freinage, à l'encontre d'une force élastique, vers une position de libération, et une commande de frein (25) selon la revendication 5.
